# EUROPÄISCHE PATENTSCHRIFT

(11) **EP 0 456 857 B1**
(45) Veröffentlichungstag und Bekanntmachung des Hinweises auf die Patenterteilung: **09.11.1994**
(21) Anmeldenummer: 90109255.1
(22) Anmeldetag: 16.05.1990
(51) Int. Cl.: H04L 25/08

(54) **Digitalschaltung mit Potentialausgleich zwischen zwei Signalleitern**
Digital circuit with potential compensation between two signal conductors
Circuit numérique avec compensation de potentiel entre deux conducteurs de signaux

(43) Veröffentlichungstag der Anmeldung: 21.11.1991
(73) Patentinhaber: SIEMENS AKTIENGESELLSCHAFT, 80333 München (DE)
(72) Erfinder: Brückner, Roland, Dipl.-Ing., D-8000 München 71 (DE)

(56) Entgegenhaltungen:
- EP-A- 0 345 623
- US-A- 4 525 836
- US-A- 4 783 636
- IEEE INTERNATIONAL CONFERENCE ON COMPUTER DESIGN: VLSI IN COMPUTERS& PROCESSORS, 3. - 5. Oktober 1988, New York, Seiten 344-347, IEEE, New York, US; T.J. GABARA et al.: "High speed, low power CMOS transmitter-receiver system"

## Beschreibung

Neuere Entwicklungen in der Digitaltechnik führen insbesondere in der Telekommunikationstechnik zu hochintegrierten CMOS-Schaltkreisen. Um Wärmeentwicklung in hochintegrierten CMOS-Schaltkreisen zu verringern, ist es von besonderer Bedeutung, den Leistungsverbrauch durch schaltungstechnische Optimierung zu minimieren.

Die Erfindung bezieht sich auf eine in CMOS-Technologie zu implementierende Digitalsignalschaltung, wobei die Schaltungsanordnung mit einem Eingangsdigitalsignal beaufschlagt und ausgangsseitig mit zwei durch Leitungskapazitäten und/oder Lastkapazitäten belastbaren Komplementärsignalleitern versehen ist, wobei über ein steuerbares Schaltelement in einem Ausgleichspfad zwischen diesen Leitern ein Potentialausgleich erreichbar ist.

Ein Potentialausgleich der beschriebenen Art ist beispielsweise aus EP-A-0 345 623 bekannt, in der eine Breitbandsignal-Koppeleinrichtung mit jeweils mit zwei Signalleitern gebildeten Matrixausgangsleitungen beschrieben wird, wobei jeweils ein zwischen den beiden Signalleitern liegender Quertransistor einen Potentialausgleich bewirkt. Es wird dabei davon ausgegangen, daß beide Leiter über mit der gleichen Taktfolge gesteuerte Schalttransistoren gleichen Kanaltyps an der selben Betriebspotentialquelle anliegen.
Bei an den Leitern anliegenden unterschiedlichen Betriebspotentialquellen würde ein Quertransistor in der beschriebenen Verwendung allerdings eine relativ aufwendige Steuerung erfordern.

Die Erfindung zeigt nun einen Weg, wie bei einer Digitalsignalschaltung der eingangs genannten Art ohne großen Aufwand ein Potentialausgleich auch zwischen zwei an unterschiedlichen Betriebspotentialquellen liegenden Leitungen erreicht werden kann.

Dies wird in einer Digitalsignalschaltung die mit einem Eingangsdigitalsignal beaufschlagt und ausgangsseitig mit zwei durch Leitungskapazitäten und/oder Lastkapazitäten belastbaren Komplementärsignalleitern versehen ist, wobei über ein steuerbares Schaltelement in einem Ausgleichspfad zwischen diesen Leitern ein Potentialausgleich erreichbar ist, erfindungsgemäß dadurch erreicht, daß der Potentialausgleich in Abhängigkeit von der Richtung der Potentialübergänge der Ausgangsdigitalsignale auf den Leitern entweder über einen ersten oder über einen zweiten Ausgleichspfad zweier zueinander antiparalleler, steuerbarer und jeweils beim Erreichen des Potentialausgleichs selbstsperrender Ausgleichspfade erfolgt.
Die Erfindung bringt in Verbindung mit dem Vorteil, daß bei einem Wechsel des jeweiligen Digitalsignalzustandes sehr schnell ein Potentialausgleich zwischen den beiden Leitern über den jeweiligen Ausgleichspfad und weiter das Umladen der beiden Leiter auf das jeweils neue Betriebspotential ermöglicht wird, den weiteren Vorteil einer Herabsetzung der sonst zur Leiterumladung erforderlichen Verlustleistung mit sich, wobei zugleich auch eine Sperrung des betreffenden Ausgleichspfades bei Potentialausgleich eintritt, ohne daß es hierzu einer besonderen Steuereinrichtung bedarf.

Der notwendige Potentialhub zur Erreichung des dem jeweiligen Ausgangsdigitalsignalzustand entsprechenden Potentials wird dabei auf die Hälfte reduziert. Der Verlustleistungsbedarf der Digitalsignalschaltung verringert sich um 50 % gegenüber dem Verlustleistungsbedarf einer Digitalsignalschaltung ohne eine solche Potentialausgleichsmöglichkeit. Durch den bis zur Potentialgleichheit kurzschlußartigen Potentialausgleich über den jeweiligen Ausgleichspfad wird zudem eine jeweils höhere Flankensteilheit des Ausgangsdigitalsignals erreicht.

Eine vorteilhafte Weiterbildung der Erfindung ist dadurch charakterisiert, daß die beiden Ausgleichspfade jeweils aus einer Serienschaltung bestehen, die mit einem Schalttransistor und einer die Selbstsperrung bewirkenden Diode ausgebildet ist, wobei die beiden Schalttransistoren in den beiden Ausgleichspfaden als CMOS-Transistoren von entgegengesetztem Kanaltyp ausgebildet sein können.

In weiterer Ausgestaltung der Erfindung werden die Ausgleichspfade nach Maßgabe des zugleich zur Ansteuerung von leiterindividuellen Treiberschaltungen genutzten Eingangsdigitalsignals gesteuert; dies hat den Vorteil einer einfachen Synchronisation zwischen der jeweiligen Ansteuerung der leiterindividuellen Treiberschaltungen und der Ansteuerung der Schalttransistoren in den Ausgleichspfaden ohne besonderen Leistungsbedarf und ohne besonderen Platzbedarf bei einer Integration der Bauelemente der Digitalsignalschaltung.

In weiterer Ausgestaltung der Erfindung können die leiterindividuellen Treiberschaltungen jeweils in einen Haupttreiber und einen Hilfstreiber unterteilt sein, wobei die Haupttreiber durch in einer Gatterschaltung gebildetete Steuerimpulsfolgen derart gesteuert werden, daß die Haupttreiber jeweils unmittelbar nach einem Zustandswechsel der Hilfstreiber in den jeweils gleichen Betriebszustand gelangen, aus dem heraus sie nach Erreichen des jeweils neuen Betriebspotentials auf dem jeweiligen Leiter in den Tristate-Zustand gelangen, während die Hilfstreiber direkt nach Maßgabe des Eingangsdigitalsignals gesteuert werden, was insofern von Vorteil ist, als die Aufteilung der leiterindividuellen Treiberschaltungen in Haupttreiber und Hilfstreiber es ermöglicht, die Dimensionierung der Hilfstreiber um ein Vielfaches geringer zu halten als die der Haupttreiber, womit eine Reduzierung der Verlustleistung bewirkt wird.
Die Haupttreiber tragen jeweils entsprechend den Steuerimpulsfolgen der Gatterschaltung zu einer weiteren Verringerung der Umladezeit der Leiterpotentiale der durch Leitungskapazitäten und/oder Lastkapazitäten belasteten Leiter in der Weise vorteilhaft bei, daß für die Dauer der Steuerimpulse über die Transistoren der Haupttreiber an den Leitern jeweils ein dem Ausgangsdigitalsignalzustand entsprechendes komplementäres Betriebspotential angelegt wird.
Die Steuerimpulsfolgen bildende Gatterschaltung wird dabei vorteilhaft ohne größeren schaltungstechnischen Aufwand aus digitalen Schaltelementen wie Invertern und Verknüpfungsgliedern zusammengesetzt, wobei jeweils durch Serienschaltung von Invertern unterschiedliche Signalverzögerungszeiten des Eingangsdigitalsignals sowie des Ausgangsdigitalsignals erreicht und über Schaltglieder zu Steuerimpulsfolgen verknüpft werden.

Eine Verknüpfung des Ausgangsdigitalsignals mit dem Eingangsdigitalsignal durch die Steuerimpulsfolgen bildende Gatterschaltung sowie das Schaltverhalten der Verknüpfungsglieder der Gatterschaltung bewirken ein verzögertes Einschalten der Haupttreiber und dadurch eine querstromfreie Anschaltung der jeweiligen Betriebspotentialquellen über die Haupttreiber an die durch Leitungskapazitäten und/oder Lastkapazitäten belasteten Leiter.

Weitere Besonderheiten der Erfindung werden aus der nachfolgenden näheren Erläuterung der Erfindung anhand der Zeichnung ersichtlich:
- FIG 1: zeigt ein Ausführungsbeispiel einer Digitalsignalschaltung gemäß der Erfindung,
- FIG 2: verdeutlicht Signalverläufe darin.

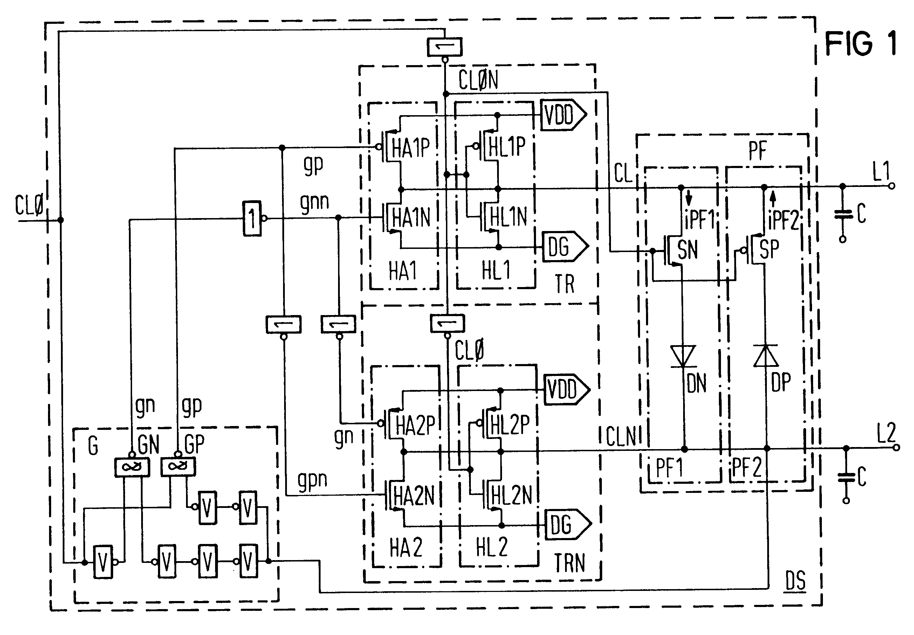

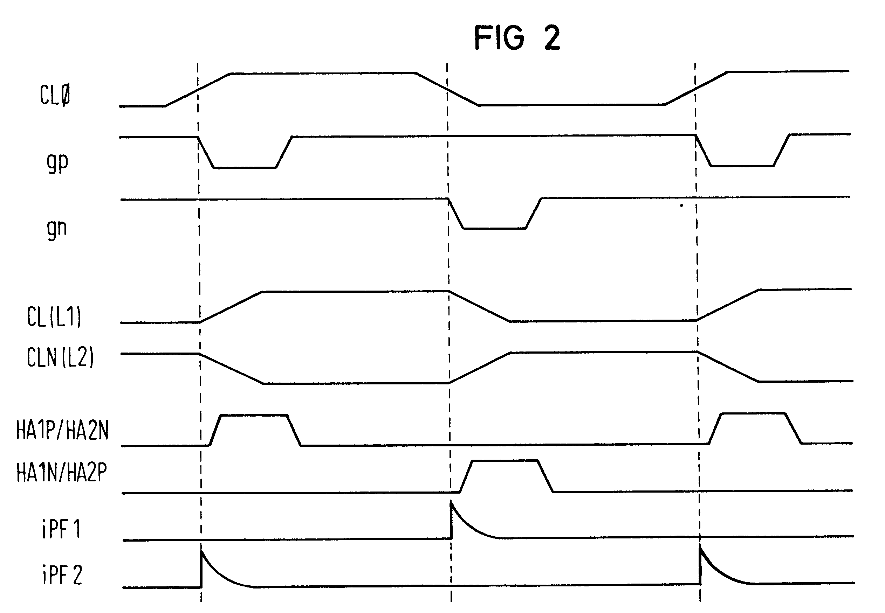

FIG 1 zeigt schematisch in zum Verständnis der Erfindung erforderlichem Umfange eine eingangsseitig mit einem Eingangsdigitalsignal CL0̸ (FIG 2, Zeile 1) beaufschlagte und ausgangsseitig mit zwei durch Leitungskapazitäten und/oder Lastkapazitäten C belastbaren Leitern L1, L2 versehene Digitalsignalschaltung DS; dabei ist über ein steuerbares Schaltelement (S) in einem Ausgleichspfad (PF) zwischen diesen Leitern L1, L2 ein Potentialausgleich erreichbar. Die beiden Leiter L1, L2 sind mit leiterindividuellen Treiberschaltungen TR, TRN versehen, die ihrerseits jeweils in einen Haupttreiber und einen Hilfstreiber unterteilt sein mögen, wie dies unten noch näher erläutert wird; zur Bildung von Steuerimpulsfolgen für die leiterindividuellen Treiberschaltungen ist eine Gatterschaltung G vorgesehen.

In der in FIG 1 skizzierten Digitalsignalschaltung DS sind nun zwischen den beiden jeweils zueinander komplementäre Signalpotentiale führenden Leitern L1, L2 zwei zueinander antiparallele, steuerbare und jeweils beim Erreichen des Potentialausgleichs selbstsperrende Ausgleichspfade vorgesehen.

Die Ausgleichspfade können in der Weise ausgebildet sein, daß in einem ersten Ausgleichspfad PF1 zu einem Schaltelement S, das ein N-Kanal-CMOS-Schalttransistor SN sein kann, ein selbstsperrendes Bauelement, z.B. eine Diode DN, in Serie geschaltet ist; in einem zweiten Ausgleichspfad PF2 möge das Schaltglied S ein P-Kanal-CMOS-Schalttransistor SP und das selbstsperrende, in Serie geschaltete Bauelement eine Diode DP sein.

Die Kathode der Diode DN im ersten Ausgleichspfad PF1 sowie die Anode der Diode DP im zweiten Ausgleichspfad PF2 sind bei dem in der Zeichnung skizzierten Ausführungsbeispiel direkt mit dem Leiter L2 verbunden.
Die Gate-Anschlüsse der CMOS-Schalttransistoren SN, SP werden mit dem negierten Eingangsdigitalsignal CL0̸N beaufschlagt und bewirken eine Durchschaltung der Schalttransistoren mit der Folge eines Potentialausgleichs zwischen den im Takt des Eingangsdigitalsignals wechselnden komplementären Potentialzuständen auf den Leitern L1, L2.

Die Treiberschaltungen TR, TRN, die jeweils in einen Haupttreiber HA1, HA2 und einen Hilfstreiber HL1, HL2 unterteilt sind, werden mit unterschiedlichen Signalfolgen gp, gnn, gn, gpn, CL0̸, CL0̸N beaufschlagt (siehe FIG 1).
Die jeweils mit einem P-Kanal-Transistor HA1P, HA2P und einem N-Kanal-Transistor HA1N, HA2N gebildeten Haupttreiber HA1, HA2 werden mit den in einer Gatterschaltung G gebildeten Steuerimpulsfolgen gn, gp, wie sie in FIG 2 in den Zeilen 2 und 3 angedeutet sind, gesondert beaufschlagt, so daß die Haupttreiber HA1, HA2 jeweils unmittelbar nach einem Zustandswechsel der Hilfstreiber HL1, HL2 in den jeweils gleichen Betriebszustand gelangen, aus dem heraus sie nach Erreichen des jeweils neuen Betriebspotentials auf dem jeweiligen Leiter in den Tristate-Zustand gelangen; die entsprechenden Transistoren HL1P, HL1N, HL2P, HL2N der Hilfstreiber HL1, HL2 ändern direkt nach Maßgabe des negierten Eingangsdigialsignals CL0̸N sowie des Eingangsdigitalsignals CL0̸ ihren Schaltzustand. Die Betriebspotentialquellen liegen jeweils an den Source-Anschlüssen der CMOS-Schalttransistoren der Haupt- und Hilfstreiber an, wobei an den Source-Anschlüssen der P-Kanal-CMOS-Transistoren HA1P, HL1P, HA2P, HL2P die Betriebspotentialquelle VDD und an den Source-Anschlüssen der N-Kanal-CMOS-Transistoren HA1N, HL1N, HA2N, HL2N die Betriebspotentialquelle DG anliegt. Ein zu dem Ausgangsdigitalsignal CL (FIG 2, Zeile 4) auf dem Leiter L1 komplementäres Ausgangsdigitalsignal CLN (FIG 2, Zeile 5) auf dem Leiter L2 wird jeweils durch komplementäre Ansteuersignale der Treiberschaltungen TR, TRN bewirkt. Wie aus den Signalverläufen in FIG 2, Zeile 1...7 zu entnehmen ist, werden die CMOS-Transistoren der Haupttreiber HA1P, HA1N, HA2N, HA2P durch die Steuerimpulsfolgen (FIG 2, Zeile 2, 3) erst leitend, wenn nach Maßgabe des Eingangsdigitalsignals CL0̸ (FIG 2, Zeile 1) durch die jeweiligen Transistoren HL1P, HL1N, HL2P, HL2N der Hilfstreiber HL1, HL2 das jeweilige Betriebspotential an die durch Leitungskapazitäten und/oder Lastkapazitäten belasteten Leiter (FIG 2, Zeile 4, 5) angelegt worden ist.

Bei einem Zustandswechsel des Ausgangsdigitalsignals kommt es in Abhängigkeit von der Richtung der Potentialübergänge auf den Leitern L1 und L2 und unter dem Einfluß des negierten Eingangsdigitalsignals CL0̸N zu einem Potentialausgleich zwischen den beiden Leitern L1 und L2 entweder über den Ausgleichspfad PF1 oder über den Ausgleichspfad PF2:

Es sei angenommen, daß aufgrund eines Zustandswechsels des Eingangsdigitalsignals vom HIGH-Signalzustand auf den LOW-Signalzustand der Leiter L1, auf dem bisher das Betriebspotential VDD gegeben sein möge, und der Leiter L2, auf dem bisher das Betriebspotential DG gegeben sein möge, nunmehr ihre Potentialzustände wechseln, d.h. auf das jeweils andere Potential DG bzw. VDD übergehen. Zu Beginn dieses Potentialüberganges wird durch das negierte Eingangsdigitalsignal CL0̸N der N-Kanal-CMOS-Schalttransistor SN leitend gemacht mit der Folge, daß der erste Ausgleichspfad PF1 leitend wird und damit einen Potentialausgleich zwischen dem Leiter L1 und dem Leiter L2 ermöglicht. Sobald dieser Potentialausgleich erreicht ist, Leiter L1 und Leiter L2 also gleiche Potentiale aufweisen, bewirkt die im Ausgleichspfad PF1 befindliche Diode DN dessen Selbstsperrung; danach setzt sich der Potentialübergang auf jedem Leiter L1, L2 für sich fort, bis das jeweils neue Betriebspotential erreicht ist.

Nimmt man umgekehrt an, daß aufgrund eines Zustandswechsels des Eingangsdigitalsignals vom LOW-Signalzustand auf den HIGH-Signalzustand der Leiter L2, auf dem bisher das Betriebspotential VDD gegeben sein möge, und der Leiter L1, auf dem bisher das Betriebspotential DG gegeben sein möge, nunmehr ihre Potentialzustände wechseln, d.h. auf das jeweils andere Potential DG bzw. VDD übergehen, so wird zu Beginn dieses Potentialüberganges durch das negierte Eingangsdigitalsignal CL0̸N der P-Kanal-CMOS-Schalttransistor SP leitend gemacht mit der Folge, daß der zweite Ausgleichspfad PF2 leitend wird und damit einen Potentialausgleich zwischen dem Leiter L2 und dem Leiter L1 ermöglicht (FIG 2, Zeile 9). Sobald dieser Potentialausgleich erreicht ist, Leiter L2 und Leiter L1 also gleiche Potentiale aufweisen, bewirkt die im Ausgleichspfad PF2 befindliche Diode DP dessen Selbstsperrung; danach setzt sich der Potentialübergang auf jedem Leiter L1, L2 für sich fort, bis das jeweils neue Betriebspotential erreicht ist.

## Patentansprüche

1. Digitalsignalschaltung (DS), die mit einem Eingangsdigitalsignal (CL0̸) beaufschlagt und ausgangsseitig mit zwei durch Leitungskapazitäten und/oder Lastkapazitäten (C) belastbaren Komplementärsignalleitern versehen ist, wobei über ein steuerbares Schaltelement in einem Ausgleichspfad zwischen diesen Leitern ein Potentialausgleich erreichbar ist,
**dadurch gekennzeichnet,**
daß der Potentialausgleich in Abhängigkeit von der Richtung der Potentialübergänge der Ausgangsdigitalsignale (CL, CLN) auf den Leitern (L₁, L₂) entweder über einen ersten oder über einen zweiten Ausgleichspfad zweier zueinander antiparalleler, steuerbarer und jeweils beim Erreichen des Potentialausgleichs selbstsperrender Ausgleichspfade (PF1, PF2) erfolgt.

2. Schaltungsanordnung nach Anspruch 1,
**dadurch gekennzeichnet,**
daß die beiden Ausgleichspfade (PF1, PF2) jeweils aus einer Serienschaltung bestehen, die mit einem Schalttransistor (SN, SP) und einer die Selbstsperrung bewirkenden Diode (DN, DP) ausgebildet ist.

3. Schaltungsanordnung nach Anspruch 2,
**dadurch gekennzeichnet,**
daß die beiden Schalttransistoren (SN, SP) in den beiden Ausgleichspfaden (PF1, PF2) als CMOS-Transistoren von entgegengesetztem Kanaltyp ausgebildet sind.

4. Schaltungsanordnung nach einem der Ansprüche 1 bis 3,
**dadurch gekennzeichnet,**
daß die Ausgleichspfade (PF1, PF2) nach Maßgabe des zugleich zur Ansteuerung von leitungsindividuellen Treiberschaltungen (TR, TRN) ausgenutzten Eingangsdigitalsignals (CL0̸) gesteuert werden.

5. Schaltungsanordnung nach Anspruch 4,
**dadurch gekennzeichnet,**
daß die leiterindividuellen Treiberschaltungen (TR, TRN) jeweils in einen Haupttreiber (HA1, HA2) und einen Hilfstreiber (HL1, HL2) unterteilt sind, wobei die Haupttreiber (HA1, HA2) durch in einer Gatterschaltung (G) gebildete Steuerimpulsfolgen (gn, gp) derart gesteuert werden daß die Haupttreiber (HA1, HA2) jeweils unmittelbar nach einem Zustandswechsel der Hilfstreiber (HL1, HL2) in den jeweils gleichen Betriebszustand gelangen, aus dem heraus sie nach Erreichen des jeweils neuen Betriebspotentials auf den jeweiligen Leiter in den Tristate-Zustand gelangen, während die Hilfstreiber direkt nach Maßgabe des Eingangsdigitalsignals (CL0̸) gesteuert werden.

6. Schaltungsanordnung nach Anspruch 5,
**dadurch gekennzeichnet,**
daß die Haupttreiber (HA1, HA2) und Hilfstreiber (HL1, HL2) jeweils mit einem P-Kanal-CMOS-Transistor (HA1P, HL1P, HA2P, HL2P) und einem N-Kanal-CMOS-Transistor (HA1N, HL1N, HA2N, HL2N) gebildet sind.

7. Schaltungsanordnung nach Anspruch 5,
**dadurch gekennzeichnet,**
daß in der Gatterschaltung (G) Inverter sowie Verknüpfungsglieder (GN, GP) vorgesehen sind, wobei an dem einen Verknüpfungsglied (GP) das Eingangsdigitalsignal (CL0̸) direkt sowie das Ausgangsdigitalsignal (CLN) über Verzögerungsglieder und an dem anderen Verknüpfungsglied (GN) das invertierte Eingangsdigitalsignal (CL0̸) sowie über weitere Verzögerungsglieder das Ausgangsdigitalsignal (CLN) anliegt.

## Claims

1. Digital signal circuit (DS) which receives an input digital signal (CL0̸) and is provided on the output side with two complementary signal conductors that can be loaded by line capacitances and/or load capacitances (C), it being possible to achieve a potential equalization by means of a controllable switch element in an equalization path between said conductors, characterized in that, depending on the direction of the potential transitions of the output digital signals (CL, CLN) on the conductors (L₁, L₂), the potential equalization is carried out either via a first or via a second equalization path of two mutually anti-parallel, controllable equalization paths (PF1, PF2) which are self-inhibiting in each case when the potential equalization has been achieved.

2. Circuit arrangement according to Claim 1, characterized in that the two equalization paths (PF1, PF2) each comprise a series circuit designed with a switching transistor (SN, SP) and a diode (DN, DP) which brings about the self-inhibition.

3. Circuit arrangement according to Claim 2, characterized in that the two switching transistors (SN, SP) in the two equalization paths (PF1, PF2) are designed as CMOS transistors of opposite channel type.

4. Circuit arrangement according to one of Claims 1 to 3, characterized in that the equalization paths (PF1, PF2) are controlled depending on the input digital signal (CL0̸)) which is simultaneously utilized for activating line-specific driver circuits (TR, TRN).

5. Circuit arrangement according to Claim 4, characterized in that the line-specific driver circuits (TR, TRN) are divided in each case into a main driver (HA1, HA2) and an auxiliary driver (BL1, HL2), the main drivers (HA1, HA2) being controlled by control pulse trains (gn, gp) formed in a gate circuit (G) in such a way that, in each case immediately after a change of state of the auxiliary drivers (HL1, HL2), the main drivers (HA1, HA2) assume the same operating state in each case, from which, after the respective new operating potential has been reached on the respective conductor, they assume the tristate condition, whereas the auxiliary drivers are controlled directly depending on the input digital signal (CL0̸).

6. Circuit arrangement according to Claim 5, characterized in that the main drivers (HA1, HA2) and auxiliary drivers (HL1, HL2) are formed in each case by a p-channel CMOS transistor (HA1P, HL1P, HA2P, HL2P) and an n-channel CMOS transistor (HA1N, HL1N, HA2N, HL2N).

7. Circuit arrangement according to Claim 5, characterized in that inverters and also gating elements (GN, GP) are provided in the gate circuit (G), the input digital signal (CL0̸) being applied directly and also the output digital signal (CLN) being applied via delay elements to the one gating element (GP), and the inverted input digital signal (CL0̸) and also, via further delay elements, the output digital signal (CLN) being applied to the other gating element (GN).

## Revendications

1. Circuit (DS) de transmission de signaux numériques, qui reçoit par un signal numérique d'entrée (CL0̸) et est muni, côté sortie, de deux conducteurs de transmission de signaux complémentaires, qui peuvent être chargés par des capacités de ligne et/ou des capacités de charge (C), une compensation de potentiel pouvant être obtenue par l'intermédiaire d'un élément de commutation commandable dans une voie de compensation entre ces conducteurs, caractérisé en ce que la compensation de potentiel s'effectue en fonction de la direction des transitions de potentiel des signaux numériques de sortie (CL, CLN) dans les conducteurs (L₁, L₂), par l'intermédiaire d'une première ou d'une seconde voie parmi deux voies (PF1, PF2) commandables de compensation, qui sont disposées tête-bêche et qui réalisent un blocage automatique lorsque la compensation de potentiel est obtenue.

2. Montage suivant la revendication 1, caractérisé en ce que les deux voies de compensation (PF1, PF2) sont constituées chacune d'un circuit série qui est formé d'un transistor (SN, SP) de commutation et d'une diode (DN,DP) réalisant le blocage automatique.

3. Montage suivant la revendication 2, caractérisé en ce que les deux transistors de commutation (SN,SP) présents dans les deux voies de compensation (PF1,PF2) sont réalisés sous la forme de transistors CMOS de types de canal opposés.

4. Montage suivant l'une des revendications 1 à 3, caractérisé en ce que les voies de compensation (PF1,PF2) sont commandées en fonction du signal numérique d'entrée (CL0̸) utilisé simultanément pour la commande de circuits d'attaque (TR, TRN) prévus respectivement dans les lignes.

5. Montage suivant la revendication 4, caractérisé en ce que les circuits d'attaque (TR, TRN), prévus respectivement dans les lignes, sont subdivisés en un étage (HA1, HA2) d'attaque principal et en un étage (HL1, HL2) d'attaque auxiliaire, les étages (HA1, HA2) d'attaque principaux étant commandés par des suites (gn, gp) d'impulsions de commande, formées dans un circuit (G) de porte, de telle sorte que les étages (HA1, HA2) d'attaque principaux passent directement après un changement d'état des étages (HL1, HL2) d'attaque auxiliaires, dans le même état de service respectif, d'où ils proviennent après que soit atteint le nouveau potentiel respectif de service dans le conducteur respectif, dans l'état Tristate, tandis que les étages d'attaque auxiliaires sont commandés directement en fonction du signal (CL0̸) numérique d'entrée.

6. Montage suivant la revendication 5, caractérisé en ce que les étages (HA1, HA2) d'attaque principaux et les étages (HL1, HL2) d'attaque auxiliaire sont formés respectivement d'un transistor CMOS à canal P (HA1P, HL1P, HA2P, HL2P) et d'un transistor CMOS à canal N (HA1L, HLlN, HA2N, HL2N).

7. Montage suivant la revendication 5, caractérisé en ce que des inverseurs ainsi que des circuits combinatoires (GN,GP) sont prévus dans le circuit (G) de porte, le signal (CL0̸) numérique d'entrée est appliqué directement à l'un des circuits combinatoires (GP), le signal (CLN) numérique de sortie est appliqué par l'intermédiaire de circuits de retardement à ce circuit combinatoire et le signal numérique d'entrée inversé (CL0̸) est appliqué directement à l'autre circuit combinatoire (GN) et le signal (CLN) numérique de sortie est appliqué à ce circuit par l'intermédiaire d'autres circuits de retardement.
